# EUROPEAN PATENT APPLICATION

(11) **EP 1 408 010 A1**
(43) Date of publication of application: **14.04.2004**
(21) Application number: 02425606.7
(22) Date of filing: 08.10.2002
(51) Int. Cl.: C03B 7/14

(54) **Method and device for shaping glass by blowing**

(71) Applicant: Glass Service S.r.l., 56027 San Miniato (Pisa) (IT)
(72) Inventor: Puccioni, Fulvio, 50051 Castelfiorentino (Firenze) (IT)
(74) Representative: Bardini, Marco Luigi

(57) **Abstract**

In glassblowing processes a pot (2) withdraws a charge (1) of molten glass from the melting furnace and an automatic blowing head (3) extracts the blank charge (1) from the pot (2), inserts it in a mould and then shapes it by blowing (air into it). The method in accordance with the invention is characterized in that before the pot (2) comes into engagement with the blowing head (3), the surface layer (1a) of the blank charge (1) is reshaped by a press ring (6) capable of penetrating partially into the blank charge (1), so that the hottest part of the molten glass is caused to rise up from the core of said blank charge, thereby disturbing the surface layer (1a) of the blank (1), thus homogenizing the glass. The invention also concerns a press ring (6) for carrying out the method of reshaping the blank charge surface prior to blowing.

## Description

The present invention concerns the glassware production field. More particularly, it concerns an improved automatic glassblowing method and a new device used in said method.

In the glassware production field, known equipments can automatically perform the glassblowing process, that is to say, the shaping of the molten glass by blowing air through it.

Such an equipment includes a blowing head capable of vertically extracting from the melting pot a bubble of molten glass, in a sufficient amount for the subsequent shaping. The bubble is then shaped by making it rotate in contact with a metal plate covered with wet paper or wood, the blowing head being in a substantially horizontal position. This operation aims at regularizing the surface of the bubble, which is thus made to assume the most appropriate form. The glass bubble is then introduced into a split metal mould. The blowing head, now again in a vertical position, then forces air into the bubble, which thus is gradually inflated. The glassy material is thus forced against the internal surface of the mould and assumes its shape. After appropriate cooling, the product formed in this way is extracted by opening the mould.

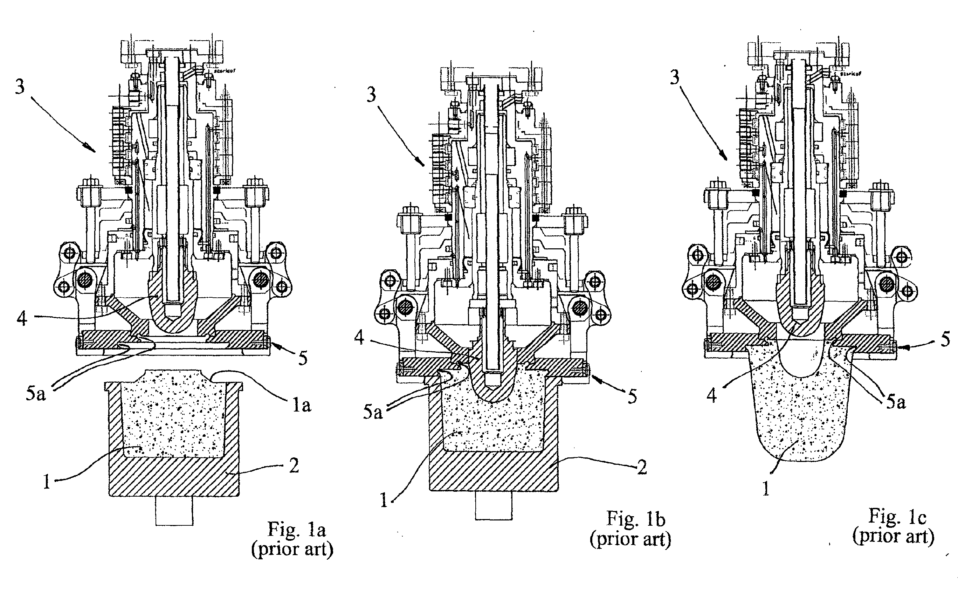

The initial part of the process, namely the extraction of a bubble 1 from a melting pot 2 by means of a blowing head, is illustrated in greater detail, albeit schematically, by figures 1a to 1c. The blowing head, generically indicated by the reference number 3, belongs to the prior art and need not here be described in detail.

Figure 1 shows the pot 2 just after it has taken the bubble 1 of molten glass away from the melting furnace. The bubble 1 exhibits on its upper side, i.e. in the zone where it will come into contact with the blowing head 3, a surface 1a with a central convexity. This surface is the result of the action of a shutter-type cutter, not shown, that, while the pot is still in the furnace, slides to shut the pot opening, thus separating the bubble 1 from the rest of the molten glass paste.

In the subsequent phase, which is illustrated by figure 1b, a punch 4 is made to eject axially from the blowing head 3 and to penetrate into the bubble 1. The part of the blowing head 3 that comes into contact with the pot 2 is an annular flange 5 of which the inner edge is shaped in such a way as to form circumferential undercuts 5a. These undercuts become filled with molten glass when the bubble 1 expands due to the penetration of the punch 4.

In this way, when the head 3 is subsequently raised (see figure 1c), the bubble 1, which in the meantime has been rendered less fluid due to cooling, is gripped by the head and extracted from the pot 2. The release of the shaped product in the mould, at the end of the blowing process, is made possible by the fact that the flange 5 can be opened radially, thereby releasing the engagement exerted by the undercuts 5a. The portion of the glassy material shaped by the undercuts 5a forms a kind of collar that is cut away as part of the finishing operations performed on the product.

A serious problem encountered in the blowing process that has just been described is bound up with the presence of quality defects of the glass that are readily visible in the finished product. These defects stem from the chemical and physical alterations produced on the surface 1a of the bubble 1 by the cutting action, alterations that will be distributed - albeit with a variable density - over the entire surface. In particular, the thermal and mechanical shock suffered by the molten glass paste when it comes into contact with the cutter leads to the formation of small glass fragments and streakings, and also gives rise to oxidation phenomena.

During the actual blowing process, when the glassy material is inflated inside the mould, these alterations result in unacceptable specklings or mottlings and air bubbles that can affect a substantial portion of the finished product. The presence of alterations on the central part of the surface 1a is particularly critical in this connection. In fact, whereas at least a part of the peripheral material will eventually form the aforementioned collar and thus become discarded, the material of the central zone will be pushed into the very body of the finished product.

This problem obviously gives rise to substantial economic losses due to the high incidence of pieces that either have to be discarded or can be sold only at a much smaller price. For this reason numerous operators in the field have made it the object of studies in the endeavour of finding some solution. To date, however, this research work has not produced any appreciable results.

The present applicant has now found an improvement of the above-described glassblowing process that is capable of providing a surprisingly effective solution of this very serious problem and in actual practice reduces the incidence of finished products with appreciable defects to insignificant proportions.

The essential characteristics of the improved glassblowing method in accordance with the present invention are delineated in the first of the appended claims. A new striker device for use in the improved method has the essential characteristics set out in claim 5 hereinbelow.

Other characteristics and advantages of the improved automatic glassblowing method in accordance with the present invention and the striker device for use in connection with this method will be brought out more clearly by the description about to be given of some embodiments thereof, which are to be considered solely as examples and not limitative in any way, said description making reference to the attached drawings of which:
- figures 1a to 1c show the initial phases of an automatic glassblowing process as known to the present state of the art, via axial sections through the pot and the blowing head;
- figure 2 is a top plan view of a striker that can be used in the method and device in accordance with the present invention;
- figure 3 shows an axial section through the striker of figure 2;
- figure 4 illustrates - in a manner similar to figures 1a to 1c - the percussion phase of the glassblowing method in accordance with the invention;
- figure 5 is a top plan view of a device in accordance with the present invention, comprising the striker of figures 2 to 4, and
- figure 6 shows a side elevation of the device of figure 5.

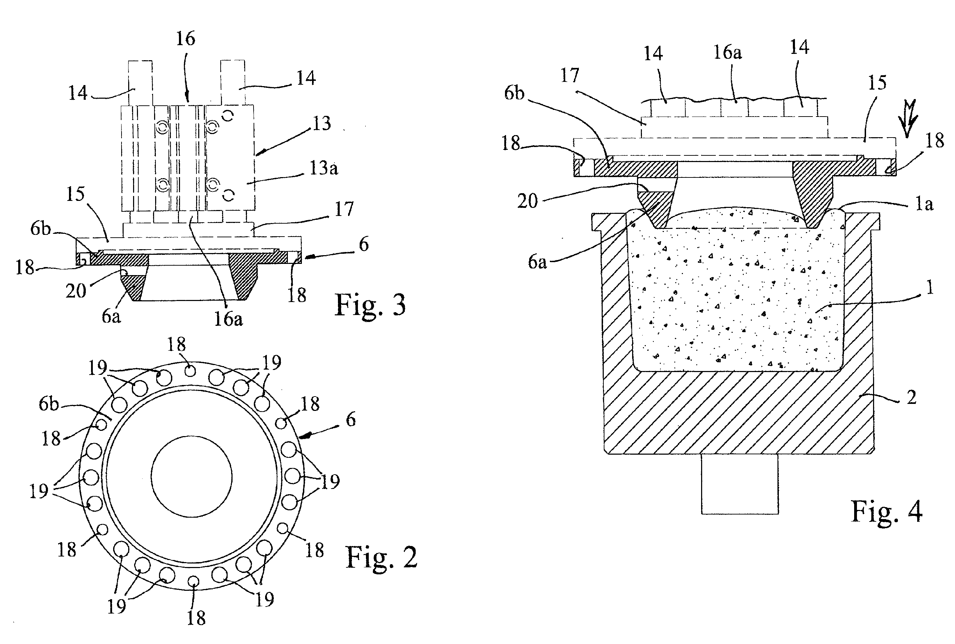

Referring to figures 2 to 4, the improved glassblowing method in accordance with the invention envisages supplementing the traditional phases previously described with an additional phase in which the bubble 1 is struck on its upper surface 1a, obviously after the pot 2 has been withdrawn from the furnace and immediately prior to the coming into action of the blowing head 3.

The percussion phase, which is illustrated by figure 4, is performed by means of a striker 6, which will be described in greater detail further on, capable of dipping partially into the bubble 1. The thin surface layer affected by the cooling and the defects brought about by the action of the cutter is thereby fractured and the penetration of the striker into the molten glass causes its hottest part of to rise up from the core of bubble 1 and to become mixed with the fractured surface layer, thus disintegrating it even further and re-melting all the glass fragments and, more generally, all the alterations/impurities therein.

In short, the result is obtained of a surprising homogenization of the molten glass in the bubble 1, eliminating the physical and chemical alterations of the surface layer and, consequently, removing the cause of the qualitative defects in the finished product.

Returning now to the striker 6, it can advantageously have the conformation shown in the figures, namely comprising a ring-shaped body 6a, with an appropriately chosen diameter, intended to strike the bubble 1 and to become partially immersed in it when arranged in a coaxial position with respect to the pot. The ring-shaped body 6a projects from - and is integral to - a flange 6b that is provided with axial holes 18 for connecting it to the driving means of the striker 6, as will be described in greater detail further on. Other axial holes 19 on the flange 6b, which have a larger diameter than the holes 18, and radial holes 20 formed in the ring-shaped body 6a, only one of which can be seen in figures 3 and 4, serve to cool the striker 6 between one use and the next, the cooling system used for this purpose being of a known type.

Even more advantageously, the internal and external side surfaces of the ring-shaped body 6a are frustoconical, such as to give it a substantially V-shaped cross section, as visible in figures 3 and 4. Apart from assisting the penetration of the striker into the bubble 1, this solution also attains the result of pushing the peripheral material of the surface layer 1a further outwards. The material in question may not be completely affected by the hot flow rising up from the core of the bubble 1 but, being pushed towards the extreme outer edge, any residual alterations and/or impurities are not likely to affect anything other than the topmost collar due to be discarded. In this way, the incidence of such alterations can be neutralized.

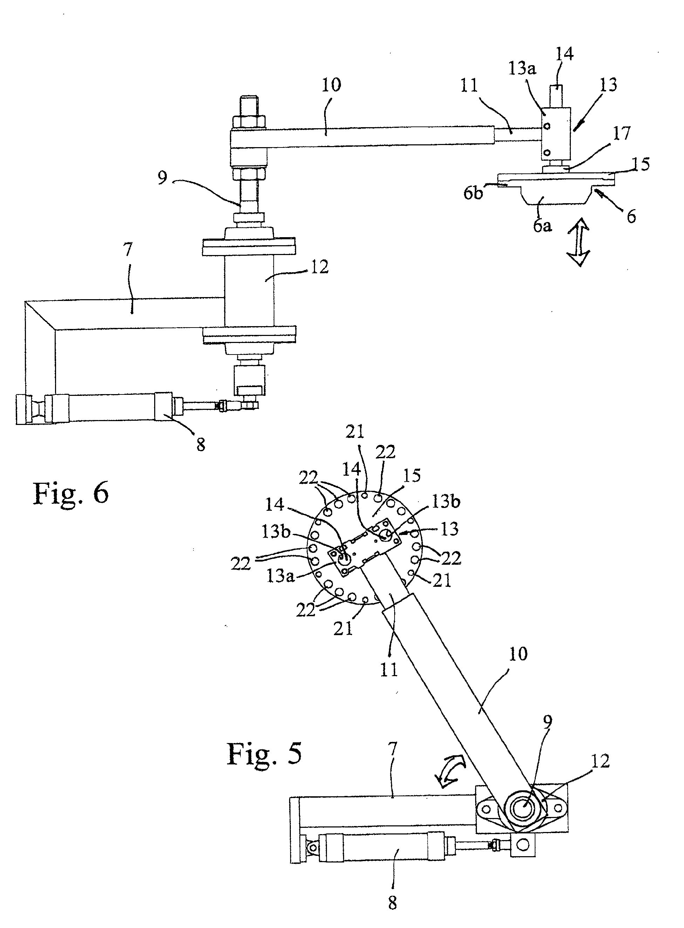

A device capable of driving the striker 6 in accordance with the invention can have the simple general construction illustrated by figures 5 and 6, to which reference will now be made. A frame 7 pivotally supports a vertical shaft 9 via a bushing box 12. A pneumatic cylinder 8 extends between the frame and the lower end of shaft 9, causing the latter to rotate around its own axis according to a crank and slotted link arrangement.

Above box 12, from the top end of shaft 9 and integral with it, there extends a first horizontal arm 10 having a box-like structure. A second horizontal arm 11 is telescopically arranged inside the first arm 10, from which it can be made to project for such distance as is appropriate for the specific installation. The striker 6 is supported by the free end of the second arm 11 via a pneumatic motion unit 13, by means of which it can be moved up and down. The unit 13 is also indicated in figure 3 by means of fine dashed lines.

More precisely, the unit 13 comprises a body 13a that carries two off-center seatings 13b within which there can slide vertical guide rods 14. Between the two seatings 13b, the body 13 also accommodates a pneumatic cylinder 16 that can be seen in figure 3. The piston rod 16a of this cylinder points vertically downward in an intermediate position between the two guide rods 14 and is parallel with them. The lower ends of the guide rods 14 and the piston rod 16a of the operating cylinder 16 are rendered integral by means of a cross piece 17. The cross piece 17 carries a plate 15 that lies in a plane at right angles to the rods and which, in its turn, carries the flange 6b of the striker 6. The plate 15 has the same shape as said flange and is also provided with a series of axial holes 21, 22 that can be seen in figure 5 and correspond, respectively, to the connection holes 18 and the cooling holes 19 of the striker flange 6b.

The device, managed by a logic control system of obvious characteristics, integrated or coordinated with the control system of the automatic glassblower, will be capable of positioning the striker 6 above the pot 2, as a result of the rotation of the shaft 9, and then performing the striking motion under the action of the pneumatic cylinder 16. The opposite movements will free the pot 2 and thus make room for the blowing head 3.

In accordance with the invention it is thus possible to satisfy a need that is very strongly felt in the glassware production sector and, what is more, with a solution that is surprisingly simple and economic. The incidence of pieces that have to be discarded is drastically lowered as compared with the prior art situation, and this implies a significant increase of productivity and greater profits.

As already mentioned, although the striker 6 having the illustrated and described characteristics is to be considered a preferred solution, strikers of different conformation will be capable of obtaining results that will always be satisfactory as compared with those of the traditional method, that is to say, completely devoid of a percussion phase. Obviously, the overall construction of the device may also be different from the one here discussed, although the latter is advantageous on account of its simplicity.

Other variants and/or modifications could be introduced into the improved glassblowing method and the device used in said method in accordance with the present invention without for this reason departing from the scope of the invention as defined by the appended claims.

## Claims

1. A glassblowing method, wherein a melting pot (2) withdraws a bubble (1) of molten glass paste from a melting furnace, and an automatic blowing head (3) extracts said bubble (1) from said pot (2), inserts said bubble (1) in a mould and shapes it by blowing air into it, said bubble (1) when withdrawn from the furnace having a surface layer (1a) produced by the action of cutting means employed to separate said bubble from the remainder of the molten glass in the furnace, said method being **characterized in that** before said pot (2) comes into engagement with said blowing head (3) said surface layer (1a) of the bubble (1) is struck by a striker (6) capable of penetrating partially into said bubble (1), so that the hottest part of the molten glass is caused to rise up from the core of said bubble, thereby disintegrating the surface layer (1a), becoming mixed with it and re-melting it, thus homogenizing the glass paste.

2. The method according to claim 1, wherein said striker (6) comprises a ring-shaped body (6a) having an outer diameter that is smaller than the internal diameter of said pot (2) .

3. The method according to claim 2, wherein said ring-shaped body (6a) has frustoconical internal and external side faces, such as to give it a substantially V-shaped cross section, for assisting its penetration into said bubble (1) and pushing the peripheral material of the surface layer (1a) further outwards.

4. The method according to any of the previous claims, wherein holes (19, 20) are formed in said striker (6) for assisting its cooling between one use and the next.

5. A device for use in a glassblowing method wherein a pot (2) withdraws a bubble (1) of molten glass paste from a melting furnace, and an automatic blowing head (3) extracts said bubble (1) from said pot (2), inserts said bubble (1) in a mould and shapes it by blowing air into it, said bubble (1) when withdrawn from the furnace having a surface layer (1a) produced by the action of cutting means employed to separate said bubble from the remainder of the molten glass in the furnace, said device being **characterized in that** it comprises a striker (6) capable of penetrating partially into said bubble (1) through the opening of said pot (2) and means for supporting and driving said striker (6) in such a manner as to bring it into a position coaxial with said pot (2) and to push it axially towards said pot.

6. The device according to claim 5, wherein said striker (6) comprises a ring-shaped body (6a) having an outer diameter that is smaller than the internal diameter of said pot (2).

7. The device according to claim 6, wherein said ring-shaped body (6a) has frustoconical internal and external side faces, such as to give it a substantially V-shaped cross section, for assisting its penetration into said bubble (1) and pushing the peripheral material of the surface layer (1a) further outwards.

8. The device according to any of claims 5 to 7, wherein holes (19, 20) are formed in said striker (6) for assisting its cooling between one use and the next.

9. A device according to any of claims 5 to 8, comprising a frame (7), a vertical shaft (9) mounted pivotally on said frame, drive means (8) arranged between said frame and a lower end of said shaft (9), capable of causing said shaft to rotate about its own axis, a first horizontal arm (10) radially projecting in an integral manner from the upper end of said shaft (9), a second horizontal arm (11) coaxially slidable with respect to said first arm (10), a drive unit (13), supported by said second arm (11), for vertically operating said striker (6), and programmable logic control means for controlling said drive means (8) of the shaft (9) and said drive unit (13) of the striker (6) .

10. Automatic glassblowing equipment, **characterized in that** it comprises a striker device according to any of claims 5 to 9.
